(19) Europäisches Patentamt
European Patent Office
Office européen des brevets

(11) **EP 3 082 532 B1**

(12) **EUROPÄISCHE PATENTSCHRIFT**

(45) Veröffentlichungstag und Bekanntmachung des Hinweises auf die Patenterteilung:
**15.08.2018   Patentblatt 2018/33**

(21) Anmeldenummer: **13811979.7**

(22) Anmeldetag: **20.12.2013**

(51) Int Cl.:
**A47J 43/25** *(2006.01)*

(86) Internationale Anmeldenummer:
**PCT/EP2013/077824**

(87) Internationale Veröffentlichungsnummer:
**WO 2015/090475 (25.06.2015 Gazette 2015/25)**

(54) **HANDREIBE**

GRATER

RÂPE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**26.10.2016   Patentblatt 2016/43**

(73) Patentinhaber: **Fissler GmbH
55743 Idar-Oberstein (DE)**

(72) Erfinder: **THELEN, Arno
55743 Idar-Oberstein (DE)**

(74) Vertreter: **Patentanwälte Bauer Vorberg Kayser Partnerschaft mbB
Goltsteinstraße 87
50968 Köln (DE)**

(56) Entgegenhaltungen:
**EP-A1- 2 497 400      DE-U1- 20 008 119
FR-A- 634 732      US-A- 1 799 963
US-A- 2 110 799**

**Beschreibung**

Die Erfindung betrifft eine Handreibe, umfassend einen Grundkörper, welcher wenigstens eine zwischen seinen beiden Endabschnitten angeordnete Reibfläche besitzt, welche dazu ausgebildet ist, um ein Reibgut, insbesondere ein Lebensmittel zumindest teilweise auf dieser zu zerreiben, wobei wenigstens einer der beiden Endabschnitte dazu ausgebildet ist, um den Grundkörper auf einem Untergrund abzustützen und der jeweils andere der beiden Endabschnitte dazu vorgesehen ist, um in einer von dem Untergrund angehobenen Lage gehalten zu werden.

Handreiben dienen allgemein dem Zerreiben von Reibgut. In Form von Haushaltsreiben werden sie insbesondere im Küchenbereich eingesetzt, wo sie zur Zerkleinerung von Lebensmitteln Verwendung finden. Deren Funktionsweise sieht vor, dass das Reibgut hierzu über eine Reibfläche gerieben wird. Die dabei gewonnene Menge an Zerriebenem hängt maßgeblich davon ab, wie oft und mit welchem Druck das Reibgut über besagte Reibfläche geführt wurde. Zur Erhöhung der Menge wird das Reibgut entsprechend oft, gewöhnlich in entgegengesetzte Richtungen abwechselnd hin und her über die Reibfläche geführt. Da die Vielzahl möglicher Reibgüter zumeist voneinander unterschiedliche Festigkeiten und Gehalte an Flüssigkeit aufweisen, kann die Reibfläche an deren jeweilige Konsistenz angepasst sein. Weiterhin hängt es von der Ausgestaltung der Reibfläche sowie der Beschaffenheit des Reibgutes ab, ob deren Kombination eine eher grobe oder feine Zerkleinerung zulässt.

Um die Zerkleinerung des Reibgutes bewirken zu können, besitzt die Reibfläche einer Handreibe in der Regel eine Vielzahl an Schneidmitteln. Bei den Schneidmitteln kann es sich beispielsweise um einzelne Erhebungen handeln. Durch diese werden einzelne Schneiden gebildet, welche je nach Form der Erhebungen dem Reibgut in wenigstens einer Richtung mehr oder weniger entgegengestellt sind. Oft werden derartige Erhebungen durch aus der Ebene der Reibfläche herausgearbeitete Ausstellungen gebildet. Hierbei können beispielsweise zungenartige oder kraterförmige Bereiche ausgeformt werden, welche im Bereich des verdrängten Materials Öffnungen hinterlassen. Die so erhaltene räumliche Zusammensetzung aus Schneidmittel und Öffnung ermöglicht, dass jeweils ein Stück des Reibgutes durch ein Schneidmittel abgeteilt und während der weiteren Bewegung durch eine der Öffnungen hindurch geführt wird. Auf diese Weise fällt das Zerriebene gewissermaßen durch die Reibfläche hindurch unter die Handreibe. Je nach Aufstell- oder Halteort der Handreibe kann das Zerriebene so beispielsweise in ein Sammelgefäß abgelegt oder gezielt auf eine Fläche oder Speise aufgebracht werden.

Für unterschiedliche Einsatzzwecke können Handreiben für deren vollständiges Abstellen sowie Auflegen auf einem Untergrund oder Sammelgefäß oder aber für ein zumindest einseitiges Abstützen ausgebildet sein. Letztere Form hat den Vorteil, dass die Handreibe zumindest bereichsweise beispielsweise über einem Teller schräg positioniert werden kann. Weitere Ausgestaltungsformen sehen einen Handgriff vor, um die Handreibe während ihrer Nutzung frei über einem Bereich zu halten. Darüber hinaus sind Mischformen der zuvor genannten Ausführungsformen bekannt.

So schlägt die DE 10 2011 078 701 A1 eine Handreibe zum Abreiben von Reibgut vor, welche einen Handgriff sowie eine V-förmige Reibfläche aufweist. Die V-förmig gegeneinander abgewinkelten und in sich ebenen Reibschenkelflächen besitzen voneinander unterschiedliche Reibmuster. Dabei erstreckt sich der Handgriff in der Verlängerung eines Rückens der Reibfläche, welcher durch die über einen Knick oder einen Bogen miteinander verbundenen Reibschenkelflächen gebildet ist. Eine dem Handgriff gegenüberliegende endseitige Kante der Handreibe ist mit Kunststoff, insbesondere mit Silikon oder TPE ummantelt. Diese ermöglicht ein schonendes und nahezu rutschfreies Abstützen der Handreibe auf einem Untergrund, während sie an ihrem anderen Ende über ihren Handgriff sowohl frei gehalten als auch abgestützt werden kann. Der wesentliche Vorteil wird hier in der V-förmigen Ausgestaltung der Reibfläche gesehen, welche der Handreibe eine erhöhte Stabilität gegenüber dem mit Druck auf deren Reibfläche zu reibendem Reibgut verleiht. Ursächlich hierfür ist das durch die Formgebung erhöhte Widerstandsmoment, welches einer etwaigen Durchbiegung der Reibfläche entgegenwirkt.

Das Zerreiben von Reibgut im nicht auf einem Untergrund abgestützten Zustand der Handreibe verlangt einen mitunter hohen Kraftaufwand. So müssen sowohl Handreibe als auch Reibgut mit geeignetem Druck gegeneinander gepresst und gleichzeitig relativ zueinander bewegt werden. Insbesondere in ihrer Konsistenz harte Reibgüter wie beispielsweise Muskatnuss oder getrockneter Ingwer können durchaus einen längeren Zeitraum zum Zerreiben erfordern. Dieser kann insbesondere bei einem Einsatz mit gestreckten Armen - wie beispielsweise an einem gedeckten Tisch - schnell zur Ermüdung führen, da der Vorgang des Zerreibens eine gewisse Anstrengung erfordert. Zudem gestaltet sich die genaue Positionierung der so frei im Raum geführten Handreibe schwierig, was eine gezielte Verteilung des Zerriebenen unweigerlich erschwert. Hier bietet das zumindest einseitige Abstützen der Handreibe auf einem Untergrund entsprechende Vorteile, da sich die zum Halten der Handreibe notwendige Handkraft deutlich reduziert. Zudem erhöht die wenigstens einseitige Auflagerung die Stabilität in der Führung der Handreibe, was deren präzisen Einsatz begünstigt.

Eine weitere Ausgestaltungsform für eine Handreibe ist der EP 0 780 080 B1 zu entnehmen. Diese weist eine heutzutage durchaus als klassisch zu bezeichnende Form ihrer Reibfläche als ebene Tafel auf. Die aus einem Blech bestehende Tafel ist randseitig in einem umlaufenden Kunststoffrahmen eingefasst, welcher an einer seiner Schmalseiten einen Griff besitzt. Weiterhin ist die Kombination mit einem Auffanggefäß vorgesehen, an welche die Reibfläche über den Kunststoffrahmen verschwenkbar anordenbar ist. Um die Stabilität der Handreibe zu erhöhen, ist ferner ein ebenfalls verschwenkbar an dem Auffanggefäß angeordneter zweiter Griff vorgesehen, welcher zum Aufstellen der Handreibe als Stütze abgeklappt werden kann. Dabei steht das Auffanggefäß zusammen mit der Reibfläche auf einem Untergrund auf, während dieses gegenüber dem Untergrund geneigt und über den als Stütze abgeklappten zweiten Griff abgestützt ist.

Die DE 200 08 119 U1 aus dem Stand der Technik zeigt ein Zerkleinerungsgerät für Lebensmittel umfassend eine mit Schneidmitteln ausgestattete Stützplatte, auf der das zu zerkleinernde Lebensmittel relativ zu den Schneidmitteln zu bewegen ist, um eine Ablösung von Schnittgut vom Lebensmittel herbeizuführen und einen die Stützplatte haltenden Drahtrahmen, der einen Handhabungsgriff aufweist.

Die US 2 110 799 A aus dem Stand der Technik zeigt eine Reibe, in welcher die Reibelemente in Bezug zum Hauptteil so geformt sind, dass im Gegensatz zu einem Zerreißen ein echter Reibvorgang stattfindet wenn ein Gewürz, Obst oder Gemüse über die Reiboberfläche hin und her bewegt wird.

Die EP 2 497 400 A1 aus dem Stand der Technik offenbart eine Schneidemaschine zum Schneiden eines Nahrungsmittels, welche Schneidemaschine einen Rahmen mit gegenüberliegenden Wänden, eine erste Stützplatte, eine zweite zwischen den gegenüberliegenden Wänden angeordnete Stützplatte, ein Schneideelement mit einer Schneidkante, positioniert zwischen der ersten und der zweiten Stützplatte, und einen Schichtdickenverstellmechanismus mit einem verstellbaren Hebel aufweist.

Die FR 634 732 A aus dem Stand der Technik zeigt ein Gerät zum Reiben von Käse, Schokolade oder einem anderen Material mit ähnlicher Konsistenz.

Die US 1 799 963 A aus dem Stand der Technik betrifft Gemüsereiben der Art, bei der geeignete sich hin- und her bewegende Mittel das Gemüse so halten, dass es auf die eigentliche Reibe oder die Reibefläche angepresst wird, sodass der Abrieb und die Säfte für die Verwendung eingesammelt werden können.

Bei den im Stand der Technik bekannten Handreiben wurde bereits eine erleichterte Handhabung realisiert, sofern diese ein wenigstens einseitiges Abstützen auf einem Untergrund ermöglichen. Gleichwohl schränkt die jeweilige Bauform der Handreibe deren möglichen Einsatzzweck ein, da diese nur selten ein praxisgerechtes Reiben über einem bestimmten Bereich wie etwa über einer bereits angerichteten Speise im zumindest einseitig aufgestützten Zustand zulässt. Mag dies beispielsweise bei im Durchmesser kleinen Tellern sowie bei kleinen Schalen oder Tabletts noch möglich sein, so ist spätestens bei der Verwendung größeren Geschirrs kein ausreichend großer maximaler Abstand zwischen Reibfläche und Stützfläche der Handreibe mehr gegeben. Mit anderen Worten kann unter diesen Bedingungen die Reibfläche im einseitig abgestützten Zustand der Handreibe dann nicht über genau dem Bereich positioniert werden, welcher mit dem Zerriebenen belegt werden soll. Insofern kann hier die Handreibe nur aufgenommen und frei in der Hand gehalten werden, um das gewünschte Ergebnis unter den zuvor aufgezeigten Nachteilen zu erhalten.

Insofern lässt sich der eigentliche Vorteil des wenigstens einseitigen Aufstützens auf einem Untergrund und somit ein gezieltes sowie ermüdungsfreies Reiben nur in wenigen Fällen des Gebrauchs tatsächlich realisieren. Handreiben, welche ein beidseitiges Aufstellen beispielsweise über ihre beiden Endbereiche vorsehen, müssen hierbei mitunter auf dem Geschirr oder gar teilweise in der Speise selbst abgestützt werden, was in der Praxis weder erwünscht ist noch eine ausreichende Stabilität während der Nutzung vermuten lässt.

Angesichts der zuvor aufgezeigten und sowohl im privaten Haushalt wie auch im professionellen Gastronomiebereich bestehenden tagtäglichen Anforderung an derartige manuelle Haushaltsgeräte bietet die Ausgestaltung von Handreiben daher durchaus noch Raum für Verbesserungen.

Vor diesem Hintergrund liegt der Erfindung die Aufgabe zugrunde, eine Handreibe der zuvor aufgezeigten Art dahingehend zu verbessern, dass diese neben einer einfachen und kostengünstigen Herstellung einen erhöhten Aktionsradius bei zumindest einseitigem Abstützen der Handreibe auf einem Untergrund zulässt, wobei die beim Abstützen ohnehin bereits vereinfachte Handhabung nochmals erleichtert ist.

Die Lösung dieser Aufgabe besteht nach der Erfindung in einer Handreibe mit den Merkmalen des Anspruchs 1. Vorteilhafte Weiterbildungen der vorgestellten Lösungen sind Gegenstand der jeweiligen Unteransprüche.

Die erfindungsgemäße Handreibe umfasst einen Grundkörper mit wenigstens einer Reibfläche, welche zwischen seinen beiden Endabschnitten angeordnet ist. Die Reibfläche ist in üblicher Weise dazu ausgebildet, um ein Reibgut und hier insbesondere ein Lebensmittel zumindest teilweise auf dieser zu zerreiben. Dabei ist wenigstens einer der beiden Endabschnitte dazu ausgebildet, um den Grundkörper auf einem Untergrund abzustützen. Demgegenüber ist der jeweils andere der beiden Endabschnitte dazu vorgesehen, um in einer von dem Untergrund angehobenen Lage gehalten zu werden. Auf diese Weise wird die Handreibe während ihres Einsatzes auf der einen Seite auf einem Untergrund gelagert und auf der anderen Seite über eine die Handreibe nutzende Person gehalten. Erfindungsgemäß ist dabei vorgesehen, dass der Grundkörper eine Bogenform aufweist, welche sich zwischen seinen beiden Endabschnitten spannt.

Als Bogenformen werden im Sinne der Erfindung all jene Ausgestaltungen verstanden, welche in Bezug auf die Längserstreckung der Handreibe; bzw. des Grundkörpers eine zwischen den Endabschnitten ausgebildete Krümmung besitzen. Demgemäß erstreckt sich der Grundkörper dabei in einer seiner Ebenen nicht entlang einer Geraden, sondern beschreibt eine von der Geraden abweichende ebene Kurve.

Weiterhin weist der Grundkörper eine gleichbleibende Krümmung auf. Unter gleichbleibend wird eine Krümmung mit einem gleichbleibenden Radius verstanden.

Der besondere Vorteil der bogenförmigen Ausgestaltung in den zuvor aufgezeigten Abmessungen ist darin zu sehen, dass die erfindungsmäße Handreibe hierdurch eine einfache und vor allem überaus flexible Handhabung ermöglicht. Durch das Aufstützen eines Endabschnitts der Handreibe auf einem Untergrund kann der gegenüberliegende Endabschnitt bequem durch eine die Handreibe nutzende Person gehalten werden. Hierdurch sind zunächst unterschiedliche Winkelstellungen der Handreibe gegenüber dem Untergrund möglich. Dank der gestreckt gebogenen Form des Grundkörpers kann die Handreibe weit auch über im Durchmesser großes Geschirr geführt werden. Auf diese Weise ist das Geriebene an jedem Ort ablegbar, an welchem dessen Verteilung tatsächlich erfolgen soll.

Hierbei wird besonderer Wert auf die Tatsache gelegt, dass die erfindungsgemäße Bogenform nunmehr auch die Möglichkeit eröffnet, das Reiben eines Reibgutes auch über einem hohen Gefäß zu vollziehen. Dank der gebogenen Form des Grundkörpers kann sich dieser nunmehr über den Rand des Gefäßes hinweg spannen, ohne dass ein Kontakt zwischen dem Rand und der Handreibe zu befürchten ist. Dies ist mit konventionellen, in ihrer Erstreckung geraden Handreiben nur mit entsprechend steilem Haltewinkel im abgestützten Zustand möglich. Dabei reicht die Reibfläche zumeist nicht weit genug über das Gefäß, so dass der mit dem Zerriebenen zu belegende Bereich nicht erreicht werden kann. Hinzu kommt, dass in einer solch steilen Anstellung der Handreibe ein Großteil des Zerriebenen gar nicht erst durch die Reibfläche hindurch fällt, sondern oberflächlich auf der Reibfläche herunter rutscht und dadurch neben dem Gefäß zum Liegen kommt. Hier ist folglich ein Auflegen der konventionellen Handreibe auf dem Rand des Gefäßes notwendig, was dann während des Reibens zum Anheben oder gar Umstürzen des Gefäßes führen kann. Zudem ist in dieser auf dem Gefäß aufgestützten Stellung keine stabile Auflagerung der Handreibe möglich.

Im Ergebnis wird durch die erfindungsgemäße Handreibe ein Höchstmaß an Flexibilität sowohl in der Nutzung selbst als auch im jeweiligen Einsatzbereich eröffnet. Grundlage hierfür ist insbesondere der durch die Bogenform deutlich erhöhte Aktionsradius bei gleichzeitig vorteilhafter zumindest einseitiger Abstützbarkeit der Handreibe auf einem festen Untergrund.

In einer besonders bevorzugten Ausgestaltung ist vorgesehen, dass der bogenförmige Grundkörper aus einer Biegeform gebildet ist. Auch wenn der Grundkörper beispielsweise aus einem gegossenen Material oder aus einem Vollmaterial heraus direkt in Bogenform herausgearbeitet sein kann, ist dieser bevorzugt durch einen Biegevorgang in seine Bogenform verbbracht. Hierzu wird das jeweilige Material entsprechend über seine elastische Verformung hinaus plastisch umgeformt. Dabei kann die Verformung entweder warm oder kalt erfolgen.

Der sich hieraus ergebende Vorteil liegt insbesondere in der kostengünstigen Herstellung des Grundkörpers. Hierzu wird bevorzugt ein Flachmaterial verwendet, welches dann um seine schwache Achse herum in die gewünschte Bogenform umgeformt wird.

Eine vorteilhafte Weiterbildung des grundsätzlichen Erfindungsgedankens sieht vor, dass der Grundkörper aus einem rahmenlosen sowie selbsttragenden Blechstreifen gebildet ist. Auch hier ist insbesondere der Kostenvorteil bei der Herstellung zu nennen, da diese lediglich die im Wesentlichen einstückige Fertigung des Grundkörpers sowie die Einbringung und/oder Aufbringung der wenigstens einen Reibfläche erfordert. Insbesondere der Wegfall etwaiger Rahmenteile zur zumindest abschnittsweisen Einfassung des Grundkörpers stellt dabei einen hohen Kostenvorteil dar. Dieser basiert im Wesentlichen auf dem so verringerten Materialeinsatz und Arbeitsaufwand.

Die konsequente Entwicklung des Erfindungsgedankens sieht in einer Weiterführung vor, dass der Grundkörper federelastisch ausgebildet sein kann. Hierdurch ist eine Krümmung der Bogenform während des Reibens eines Reibgutes zumindest teilweise veränderbar. Ursächlich hierfür ist der zumeist notwendige Anpressdruck für das Reibgut auf die Reibfläche, um das gewünschte Ergebnis zu erzielen.

Durch die federelastische Ausbildung des Grundkörpers wird eine vorteilhafte Unterstützung des Reibvorgangs durch die Handreibe selbst erzeugt. Dieser liegt die Tatsache zugrunde, dass der über das Reibgut auf die Bogenform aufgebrachte Anpressdruck durch die begrenzte Nachgiebigkeit eine Gegenreaktion erzeugt. Diese wirkt dem aufgebrachten Anpressdruck entgegen, so dass das Reibgut quasi durch zwei gegenüberliegende Kraftrichtungen auf die Reibfläche gepresst wird. Der dabei auftretende und den Reibvorgang spürbar erleichternde Gegendruck der Handreibe geht über das Maß hinaus, welches auch durch ebene Handreiben erreicht wird. Vielmehr ist die einseitig aufgestützte Bogenform dafür verantwortlich, dass ein Teil der durch das einseitige Halten in den Grundkörper eingebrachten Normalkraft eine in radialer Richtung der Bogenform gerichtete Komponente enthält. So kann der beschriebene Gegendruck mitunter erhöht werden, wenn die Handreibe gezielt mit erhöhter Kraft auf dem Untergrund abgestützt wird.

Im Rahmen der Erfindung ist es denkbar, dass der Grundkörper eine seine Materialdicke übersteigende Breite aufweist, welche sich in radialer Richtung der Bogenform erstreckt. Auf diese Weise wäre ein Grundkörper geschaffen, welcher auf einer seiner beiden bogenförmigen Seitenflächen wenigstens eine Reibfläche besitzt Demgegenüber wird es als vorteilhaft angesehen, wenn die Reibfläche auf einem Außenumfang des bogenförmigen Grundkörpers angeordnet ist. Dies insbesondere vor dem Hintergrund der federelastischen Ausbildung des Grundkörpers und den sich daraus ergebenden, zuvor aufgezeigten Vorteilen.

Der Grundkörper besitzt wenigstens zwei Reibflächen. Diese sind zwischen seinen beiden Endabschnitten hintereinander angeordnet. So wird die durch die Ausgestaltung des Grundkörpers zur Verfügung stehende Fläche vorteilhaft genutzt, um voneinander unterschiedliche Reibflächen in einer einzelnen Handreibe zur Verfügung zu stellen. Besonders bevorzugt sind die Reibflächen bis möglichst nah an die Endbereiche ausgebildet, so dass ein möglichst großer Aktionsradius zum Aufbringen des Zerriebenen erreicht wird.

Gemäß einer vorteilhaften Weiterentwicklung kann wenigstens einer der beiden Endabschnitte des Grundkörpers eine Auflagerfläche aus einem zumindest bereichsweise elastischen Material besitzen. Auf diese Weise wird eine die Kontakt zum jeweiligen Untergrund erhöhende und somit rutschhemmende Wirkung erzeugt, um die Handreibe sicher über ihrem jeweiligen Einsatzort zu positionieren. Zudem wird der jeweilige Untergrund durch die elastische Auflagerfläche geschont, was insbesondere vor dem Hintergrund der Reibbewegungen und dem damit einhergehenden Verschieben des aufgestützten Grundkörpers deutlich wird. Eben jene Verschiebebewegungen werden durch die elastisch ausgebildete Auflagerfläche sowohl reduziert als auch in Bezug auf eine mögliche Verletzung des Untergrundes entschärft.

Beide Endabschnitte des Grundkörpers weisen jeweils einen Griffbereich auf. Der oder die Griffbereiche sind in vorteilhafter Weise zumindest bereichsweise aus einem elastischen Material gebildet. Die Griffbereiche können sowohl zum Halten als auch in Form einer Auflagerfläche zum Abstützen der Handreibe auf einem Untergrund dienen. Zum einen wird der die Handreibe nutzenden Person durch die Anordnung der Griffbereiche die vorgesehene Handhabung verdeutlicht. Zum anderen wird der Kontakt zwischen Person und Handreibe sowohl angenehmer als auch sicherer gestaltet. So lässt das elastische Material einen angenehmeren Griff zu und erhöht gleichzeitig die Reibung zwischen Hand und Handreibe. Da bei der Bearbeitung und Zubereitung von Lebensmitteln die Hände nicht selten befeuchtet werden, wird dank der elastischen und somit rutschhemmenden Griffbereiche insbesondere die Arbeitssicherheit erhöht.

So ist in einer Weiterführung der Erfindung ferner angedacht, dass die beiden Endabschnitte des Grundkörpers identisch ausgebildet sein können. Auf diese Weise wird die Handhabung der Handreibe nochmals vereinfacht, da diese nicht zwingend eine konkrete Halterichtung vorgibt. So kann diese mit jedem ihrer beiden Endabschnitte auf einem Untergrund abgestützt und über den jeweils anderen Endabschnitt gehalten werden, ohne dass es zu einer Fehlbedienung kommen kann.

Die Erfindung sieht im Übrigen ein vorteilhaftes Verhältnis in Bezug auf die Ausgestaltung der Bogenform vor. Da die Erstreckung des Grundkörpers in seiner gekrümmten Längsrichtung endlich ist, weisen dessen beide Endabschnitte einen maximalen Abstand zwischen sich auf. Weiterhin weist die Bogenform eine maximale Höhe auf. Hier sieht die Erfindung vor, dass die maximale Höhe der Bogenform kleiner als 30% des maximalen Abstands zwischen den beiden Endabschnitten ist. Mathematisch ausgedrückt weist die erfindungsgemäße Bogenform daher folgende Ausgestaltung auf:

$$\text{Höhe (a)} \leq 0{,}3 * \text{Abstand (b)}$$

Unter dem Abstand (b) wird vorliegend die Länge einer Sehne der Bogenform verstanden, welche zwischen den jeweils äußersten Enden der beiden Endabschnitte verläuft. Jene Höhe (a) ist im Zusammenhang mit der Erfindung so definiert, dass ein Bogen der Bogenform zusammen mit der zuvor erwähnten Sehne im geometrischen Sinne ein Kreissegment bilden. Dabei steht die Höhe senkrecht auf der Sehne und erstreckt sich bis zum einem am weitesten von der Sehne im geometrischen Sinne ein Kreissegment bilden. Dabei steht die Höhe senkrecht auf der Sehne und erstreckt sich bis zum einem am weitesten von der Sehne entfernten Punkt der Bogenform.

Das zuvor aufgezeigte Verhältnis von Höhe zu Abstand hat sich als besonders vorteilhaft herausgestellt, da dieses einen idealen Kompromiss zwischen guter Erreichbarkeit des gewünschten Bereichs bei gleichzeitig einfacher Handhabung und praxisgerechter Abmessung widerspiegelt. Weiterhin bevorzugt kann der zuvor mit 30% bzw. 0,3 angegebene Wert auch 25% bzw. 0,25 betragen, wodurch insgesamt eine flachere Krümmung des Grundkörpers erreicht wird. Idealerweise wird der in Rede stehende Wert zwischen 20% und 25% bzw. 0,2 und 0,25 eingestellt, wodurch sich eine für die meisten Einsatzzwecke größtmögliche Abdeckung in Bezug auf die Ausgestaltung der Bogenform ergibt.

Die zuvor aufgezeigte Handreibe ermöglicht einen überaus flexiblen Gebrauch, welche einen gegenüber den im Stand der Technik bekannten Ausführungen größeren Aktionsradius ermöglicht. Insbesondere die Bogenform ist maßgeblich für die einfache Abstützbarkeit der Handreibe und die gleichzeitige Positionierbarkeit über diversen Gefäßen und Geschirr. Dank der erfindungsgemäßen Ausgestaltung erfährt zudem der Vorgang des Reibens weitere Unterstützung, da der zumindest begrenzt biegsame Grundkörper der Handreibe eine Erhöhung des Anpressdruck zwischen Reibgut und Reibfläche aktiv unterstützt. In dieser Ausgestaltung kann der Grundkörper einen parallelen Verlauf seiner Längskanten aufweisen. In einer alternativen Ausgestaltung können die Längskanten zumindest abschnittsweise auch einen Winkel zwischen sich einschließen. Denkbar ist auch ein gekrümmter Verlauf wenigstens einer der Längskanten. Auch können die Längskanten des Grundkörpers zumindest abschnittsweise konkav oder konvex zueinander verlaufen.

Nachfolgend wird die Erfindung anhand eines in den Zeichnungen dargestellten Ausführungsbeispiels näher erläutert. Es zeigen:

Fig. 1     eine schematische Darstellung einer erfindungsgemäßen Handreibe in einer Seitenansicht,

Fig. 2     die Handreibe aus Fig. 1 in einer perspektivischen Darstellungsweise,

Fig. 3     die Handreibe aus den Fig. 1 und 2 in einer typischen Einsatzsituation in einer Seitenansicht sowie

Fig. 4     die Einsatzsituation der Handreibe aus Fig. 3 in einer perspektivischen Darstellungsweise.

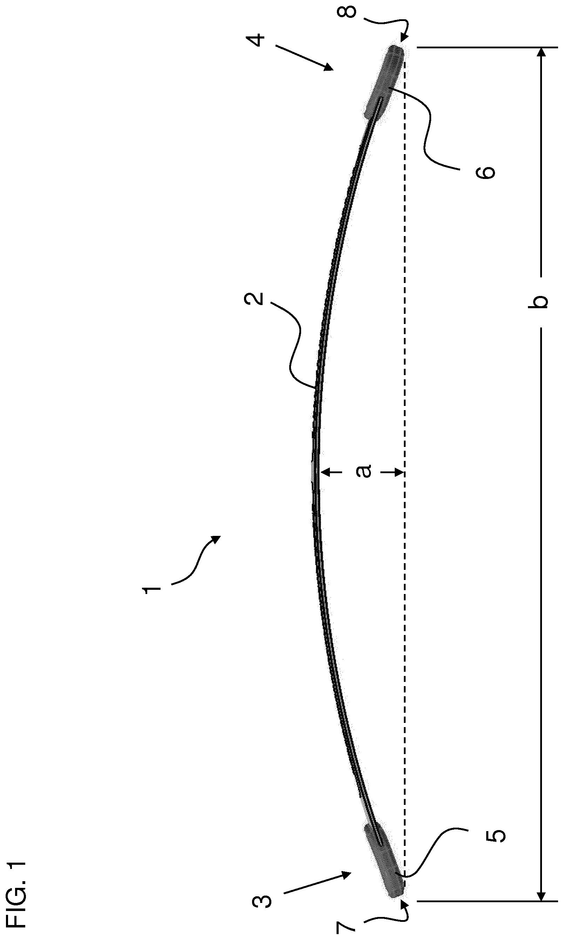

Aus Fig. 1 geht der schematische Aufbau einer erfindungsgemäßen Handreibe 1 hervor. Die Handreibe 1 umfasst einen Grundkörper 2 mit einem ersten Endabschnitt 3 und einem diesem gegenüberliegenden zweiten Endabschnitt 4. Dabei erstreckt sich der Grundkörper 2 zwischen seinen beiden Endabschnitten 3, 4. Wie zu erkennen, weist der Grundkörper 2 erfindungsgemäß gekrümmte Form; bzw. eine Bogenform auf, welche sich zwischen seinen beiden Endabschnitten 3, 4 spannt. Vorliegend besteht der Grundkörper 2 aus einer Biegeform, welche aus einem rahmenlosen sowie selbsttragenden Blechstreifen gebildet ist. In dieser Ausgestaltung ist der Grundkörper 2 in nicht näher verdeutlichter Weise federelastisch ausgebildet, so dass eine Krümmung der Bogenform während Einsatzes der Handreibe 1 zumindest teilweise veränderbar ist.

Beide Endabschnitte 3, 4 des Grundkörpers 2 weisen jeweils einen Griffbereich 5, 6 auf, wobei ein erster Griffbereich 5 an den ersten Endabschnitt 3 und ein zweiter Griffbereich 6 an dem zweiten Endabschnitt 4 angeordnet ist. Die Griffbereiche 5, 6 sind bevorzugt zumindest teilweise aus einem elastischen Material gebildet. Hierzu können die Griffbereiche 5, 6 beispielsweise aus Silikon an die Endabschnitte 3, 4 des Grundkörpers 2 angespritzt sein. Wie zu erkennen, sind die beiden Endabschnitte 3, 4 des Grundkörpers 2 zusammen mit den Griffbereichen 5, 6 identisch ausgebildet. Hierdurch schreibt die Handreibe 1 nicht zwingend eine Richtung ihrer Verwendung vor. Hierbei besitzen beiden Endabschnitte 3, 4 des Grundkörpers 2 jeweils eine Auflagerfläche 7, 8, welche vorliegend aus wenigstens einem Teil der beiden Griffbereiche 5, 6 aus dem elastischen Material gebildet werden. So weist der erster Griffbereich 5 eine erste Auflagerfläche 7 und der zweite Griffbereich 6 eine zweite Auflagerfläche 8 auf.

Die erfindungsgemäße Bogenform des Grundkörpers 2 weist eine maximale Höhe a sowie einen maximalen Abstand b zwischen seinen beiden Endabschnitten 3, 4 auf. Dabei kann die maximale Höhe a weniger als oder gleich 30% des maximalen Abstands b betragen. Vorliegend beträgt die Höhe a 21% des maximalen Abstands b.

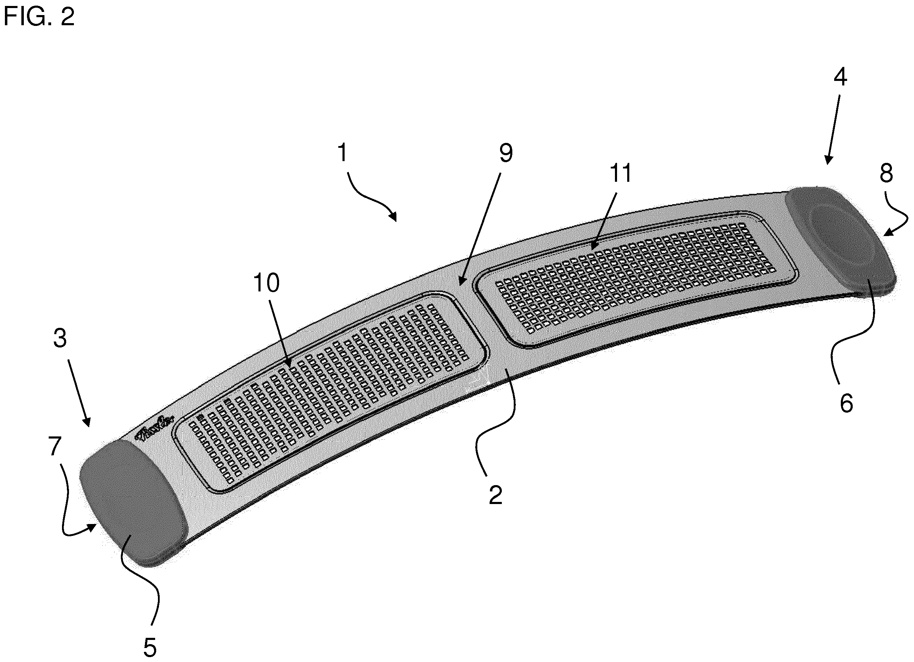

Fig. 2 zeigt die Handreibe 1 aus Fig. 1 in einer perspektivischen Ansicht, welche größtenteils die Ansicht eines Außenumfangs 9 des Grundkörpers 2 zeigt. In dieser Ansicht ist ersichtlich, dass der Grundkörper 2 wenigstens eine sich zwischen seinen beiden Endabschnitten 3, 4 angeordnete Reibfläche 10, 11 besitzt. Im gezeigten Ausführungsbeispiel besitzt der Grundkörper 2 zwei zwischen seinen Endabschnitten 3, 4 angeordnete Reibflächen 10, 11; eine erste Reibfläche 10 und eine zweite Reibfläche 11. Dabei sind beide Reibflächen 10, 11 auf dem Außenumfang 9 des bogenförmigen Grundkörpers 2 angeordnet.

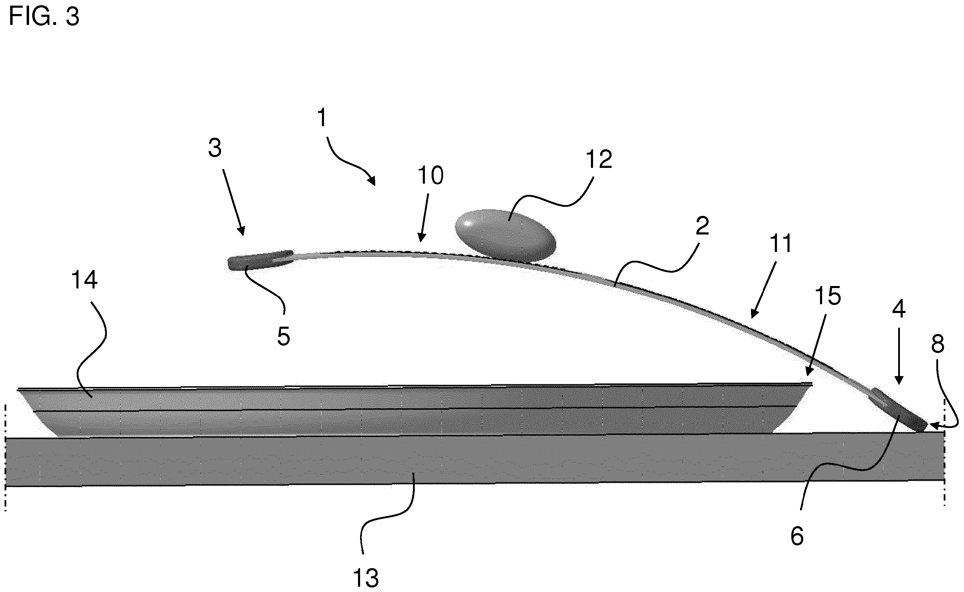

Fig. 3 zeigt eine typische Verwendung der erfindungsgemäßen Handreibe 1 in einer Seitenansicht gemäß Fig. 1. So sind die Reibflächen 10, 11 dazu ausgebildet, um ein Reibgut 12, insbesondere ein Lebensmittel zumindest teilweise auf wenigstens einer dieser Reibflächen 10, 11 zu zerreiben. Beide Endabschnitte 3,4 sind dazu ausgebildet, um den Grundkörper 2 auf einem hier angedeuteten Untergrund 13 abzustützen. Weiterhin sind beide Endabschnitte 3, 4 ebenfalls dazu vorgesehen, um in einer von dem Untergrund angehobenen Lage gehalten zu werden. Wie zu erkennen, ist die Handreibe 1 mit den zweiten Endabschnitt 4 über die zweite Auflagerfläche 8 des zweiten Griffbereichs 6 auf einer Oberfläche des Untergrunds 13 abgestützt. Demgegenüber ist der erste Endabschnitt 3 von dem Untergrund 13 angehoben und über ein Gefäß 14 in nicht näher gezeigter Form an seinem ersten Griffbereich 5 gehalten. Dabei weist das Reibgut 12 vorliegend einen umfangsseitigen Kontakt mit der ersten Reibfläche 10 auf, auf welcher in nicht weiter gezeigter Weise hin und her gerieben wird.

In dieser Ansicht wird deutlich, wie vorteilhaft sich die erfindungsgemäße Bogenform des Grundkörpers 2 über einen Rand 15 des Gefäßes hinweg erstreckt. Gleichzeitig ist zu erkennen, wie weit die Handreibe 1 und insbesondere deren erste Reibfläche 10 über das Gefäß 14 reicht, um nicht gezeigtes Zerriebenes des Reibgutes 12 in einen Innenbereich oder eine nicht gezeigte Speise aufzubringen.

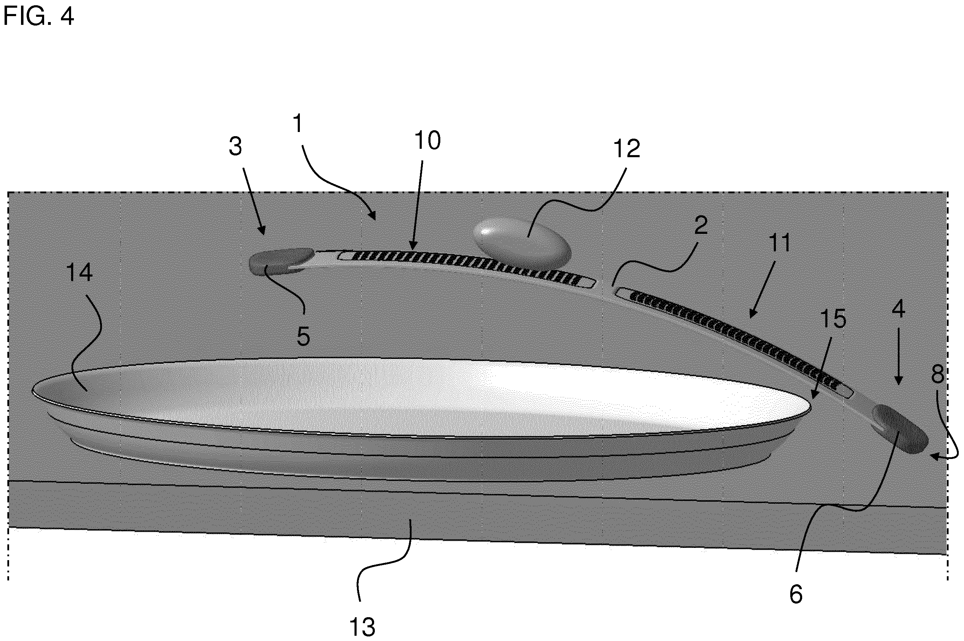

Fig. 4 verdeutlicht die in Fig. 3 bereits dargestellte Verwendung der erfindungsgemäßen Handreibe 1 nochmals in einer perspektivischen Ansicht.

**Bezugszeichen:**

1 -     Handreibe
2-     Grundkörper von 1
3 -     erster Endabschnitt von 2
4 -     zweiter Endabschnitt von 2
5 -     erster Griffbereich an 3

6 -	zweiter Griffbereich an 4
7 -	erste Auflagerfläche an 5
8 -	zweite Auflagerfläche an 6
9 -	Außenumfang von 2
10 -	erste Reibfläche von 2
11 -	zweite Reibfläche von 2
12-	Reibgut
13-	Untergrund
14-	Gefäß
15 -	Rand von 14

a -	Höhe von 2, maximal
b -	Abstand zwischen 3 und 4, maximal

**Patentansprüche**

1. Handreibe, umfassend einen Grundkörper (2), welcher wenigstens eine zwischen seinen beiden Endabschnitten (3, 4) angeordnete Reibfläche (10, 11) besitzt, welche dazu ausgebildet ist, um ein Reibgut (12), insbesondere ein Lebensmittel zumindest teilweise auf dieser zu zerreiben, wobei der Grundkörper (2) wenigstens zwei zwischen seinen beiden Endabschnitten (3, 4) hintereinander angeordnete und voneinander unterschiedliche Reibflächen (10, 11) besitzt und wobei beide Endabschnitte (3, 4) sowohl als Griffbereiche (3, 4) zum Halten in einer von dem Untergrund angehobenen Lage als auch in Form von Auflagerflächen (5, 6) zum Abstützen der Handreibe auf einem Untergrund (13) ausgeführt sind, **dadurch gekennzeichnet, dass** der Grundkörper (2) eine sich zwischen seinen beiden Endabschnitten (3, 4) spannende Bogenform aufweist und dass der Grundkörper (2) eine Krümmung mit einem gleichbleibenden Radius aufweist.

2. Handreibe nach Anspruch 1, **dadurch gekennzeichnet, dass** der bogenförmige Grundkörper (2) aus einer Biegeform gebildet ist.

3. Handreibe nach einem der Ansprüche 1 oder 2, **dadurch gekennzeichnet, dass** der Grundkörper (2) aus einem rahmenlosen sowie selbsttragenden Blechstreifen gebildet ist.

4. Handreibe nach einem der Ansprüche 1 bis 3, **dadurch gekennzeichnet, dass** der Grundkörper (2) federelastisch ausgebildet ist, wobei eine Krümmung der Bogenform während des Reibens eines Reibgutes zumindest teilweise veränderbar ist.

5. Handreibe nach einem der Ansprüche 1 bis 4, **dadurch gekennzeichnet, dass** die Reibfläche (10, 11) auf einem Außenumfang (9) des bogenförmigen Grundkörpers (2) angeordnet ist.

6. Handreibe nach einem der Ansprüche 1 bis 5, **dadurch gekennzeichnet, dass** wenigstens einer der beiden Endabschnitte (3, 4) des Grundkörpers (2) eine Auflagerfläche (7, 8) aus einem Material mit hohem Reibungskoeffizienten besitzt.

7. Handreibe nach einem der Ansprüche 1 bis 6, **dadurch gekennzeichnet, dass** wenigstens einer der beiden Endabschnitte (3, 4) des Grundkörpers (2) eine Auflagerfläche (7, 8) aus einem zumindest bereichsweise elastischen Material besitzt.

8. Handreibe nach einem der Ansprüche 1 bis 7, **dadurch gekennzeichnet, dass** die beiden Endabschnitte (3, 4) des Grundkörpers (2) jeweils einen Griffbereich (5, 6) aus einem elastischen Material aufweisen.

9. Handreibe nach einem der Ansprüche 1 bis 8, **dadurch gekennzeichnet, dass** die beiden Endabschnitte (3, 4) identisch ausgebildet sind.

10. Handreibe nach einem der Ansprüche 1 bis 9, **dadurch gekennzeichnet, dass** die Bogenform des Grundkörpers (2) eine maximale Höhe (a) und einen maximalen Abstand (b) zwischen den beiden Endabschnitten (3, 4) besitzt, wobei die maximale Höhe (a) kleiner als (<) oder gleich (=) 30% des maximalen Abstands (b) ist.

**Claims**

1. Grater, comprising a base body (2), which at least has one grating surface (10, 11) arranged between its two end portions (3, 4), which is configured for grating thereon, at least partially, a product to be grinded (12), particularly a food product, wherein the base body (2) has at least two grating surfaces (10, 11) arranged between its two end portions (3, 4) one after the other and different from each other, and wherein the two end portions (3, 4) are realized both as grip zones (3, 4) for maintaining in a position lifted from the underground and in the form of bearing surfaces (5, 6) for supporting the grater on an underground (13), **characterized in that** the base body (2) has an arcuate shape spanning between its two end portions (3, 4) and **in that** the base body (2) is curved with constant radius.

2. Grater according to Claim 1, **characterized in that** the curved base body (2) is formed from a rebar shape.

3. Grater according to one of the Claims 1 or 2, **characterized in that** the base body (2) is formed from a frameless and self-bearing sheet-metal strip.

4. Grater according to one of the Claims 1 to 3, **char-**

acterized in that the base body (2) is elastically formed, wherein a curve of the arcuate shape is at least partially variable while grating a product to be grated.

5. Grater according to one of the Claims 1 to 4, **characterized in that** the grating surface (10, 11) is disposed on an outer periphery (9) of the arc-shaped base body (2).

6. Grater according to one of the Claims 1 to 5, **characterized in that** at least one of the two end portions (3, 4) of the base body (2) has a bearing surface (7, 8) of a material having high frictional coefficient.

7. Grater according to one of the Claims 1 to 6, **characterized in that** at least one of the two end portions (3, 4) of the base body (2) has a bearing surface (7, 8) of an at least locally elastic material.

8. Grater according to one of the Claims 1 to 7, **characterized in that** the two end portions (3, 4) of the base body (2) each have a grip zone (5, 6) of elastic material.

9. Grater according to one of the Claims 1 to 8, **characterized in that** the two end portions (3, 4) are realized identically.

10. Grater according to one of the Claims 1 to 9, **characterized in that** the arcuate shape of the base body (2) has maximum height (a) and maximum distance (b) between the two end portions (3, 4), wherein the maximum height (a) is smaller than (<) or equal to (=) 30% of the maximum distance (b).

**Revendications**

1. Râpe, comprenant un corps de base (2), qui au moins a une surface de râpe (10, 11) arrangée entre ses deux parties d'extrémité (3, 4), qui est adaptée pour râper, au moins partiellement, un produit râpe (12), particulièrement un produit alimentaire sur celle-ci, dans laquelle le corps de base (2) a au moins deux surfaces de râpe (10, 11) arrangées entre ses deux parties d'extrémité (3, 4) l'une après l'autre et différentes l'une de l'autre et dans laquelle les deux parties d'extrémité (3, 4) sont réalisées à la fois en tant que des régions de préhension (3, 4) pour maintenir dans une position soulevée du sous-sol et en forme de surfaces d'appui (5, 6) pour supporter la râpe sur un sous-sol (13), **caractérisée en ce que** le corps de base (2) comprend une forme arquée s'étendant entre ses deux parties d'extrémité (3, 4) et en ce que le corps de base (2) comprend une courbure avec un rayon constant.

2. Râpe selon la revendication 1, **caractérisée en ce que** le corps de base (2) arqué est formé à partir d'une forme de bombage.

3. Râpe selon l'une des revendications 1 ou 2, **caractérisée en ce que** le corps de base (2) est formé à partir d'une bande de tôle sans cadre et autoportante.

4. Râpe selon l'une des revendications 1 à 3, **caractérisée en ce que** le corps de base (2) est formé élastiquement, dans laquelle une courbure de la forme arquée est au moins partiellement variable pendant le râpage d'un produit râpe.

5. Râpe selon l'une des revendications 1 à 4, **caractérisée en ce que** la surface de râpe (10, 11) est disposée sur une périphérie extérieure (9) du corps de base arqué (2).

6. Râpe selon l'une des revendications 1 à 5, **caractérisée en ce qu**'au moins l'une des deux parties d'extrémité (3, 4) du corps de base (2) a une surface d'appui (7, 8) d'un matériau à coefficient de frottement élevé.

7. Râpe selon l'une des revendications 1 à 6, **caractérisée en ce qu**'au moins l'une des deux parties d'extrémité (3, 4) du corps de base (2) a une surface d'appui (7, 8) d'un matériau au moins localement élastique.

8. Râpe selon l'une des revendications 1 à 7, **caractérisée en ce que** les deux parties d'extrémité (3,4) du corps de base (2) chacune a une région de préhension (5, 6) d'un matériau élastique.

9. Râpe selon l'une des revendications 1 à 8, **caractérisée en ce que** les deux parties d'extrémité (3, 4) sont de réalisation identique.

10. Râpe selon l'une des revendications 1 à 9, **caractérisée en ce que** la forme arquée du corps de base (2) a une hauteur maximale (a) et une distance maximale (b) entre les deux parties d'extrémité (3, 4), dans laquelle la hauteur maximale (a) est inférieure à (<) ou égale à (=) 30% de la distance maximale (b).

FIG. 1

FIG. 2

FIG. 3

EP 3 082 532 B1

FIG. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011078701 A1
- EP 0780080 B1
- DE 20008119 U1
- US 2110799 A
- EP 2497400 A1
- FR 634732 A
- US 1799963 A